Europäisches Patentamt

European Patent Office

Office européen des brevets

(19)

(11) **EP 1 211 859 A2**

(12) **EUROPEAN PATENT APPLICATION**

(43) Date of publication:
**05.06.2002 Bulletin 2002/23**

(51) Int Cl.7: **H04L 27/14**

(21) Application number: **01000608.8**

(22) Date of filing: **09.11.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **09.11.2000 US 248491**

(71) Applicant: **Texas Instruments Incorporated Dallas, Texas 75251 (US)**

(72) Inventor: **Sundaresan, Harini V.**
**75252, Dallas (US)**

(74) Representative: **Holt, Michael**
**Texas Instruments Ltd.,**
**EPD MS/13,**
**800 Pavilion Drive**
**Northampton Business Park,**
**Northampton NN4 7YL (GB)**

(54) **Fixed-point DSP implementation of FM demodulation and decoding**

(57) FM demodulation and decoding in a fixed point DSP is disclosed. The fixed point DSP must carry out division and arctan calculations for which there is no dedicated hardware. Division is normally achieved either by using the Newton-Raphson method or by using "conditional subtraction' instruction. Another and faster technique is to use a table look-up approach. However, in a table look-up, if the denominator value is very small, the size of the table look-up will be large. The present invention manipulates the in-phase representation of the denominator to overcome the table look-up problem by adding the integer two (2) to the value of 1/RL (34) to obtain 1/RL+2 before using the look-up table (36) to reduce the instruction cycle time. In addition, for decoding, the invention uses an efficient implementation of pilot frequency computation by choosing DFT snapshot value (46) at 0°, 90°, 180°, 270° and 360° to reduce the number of multiplication steps.

FIG 2A

FIG 2B

EP 1 211 859 A2

**Description**

TECHNICAL FIELD OF THE INVENTION

The technical field of this invention is digital signal processors ("DSPs") and more specifically, a more efficient method of using a fixed point DSP for FM demodulation and decoding.

BACKGROUND OF THE INVENTION

As is recognized by those skilled in the art, FM Modulation is a type of angle modulation and involves the modulation of the frequency of a sinusoidal carrier by a message signal which can be expressed by the equation:

$$1) \qquad X_{angle} = A_c \cos[2\pi f_c + \emptyset(t)]$$

where

$2\pi f_c(\omega)$ = the carrier frequency
$A_c$ = constant amplitude factor
$\emptyset(t)$ = the modulating input signal (phase)

Also as is known, the message signal m(t) is contained in the term $\emptyset(t)$ of equation 1) above which represents the phase of the carrier. The relationship between $\emptyset(t)$ and m(t) may be expressed as follows:

$$\emptyset(t) \quad = \quad 2\pi f_d \int_\infty^t m(x)dx$$

where $f_d$ is the frequency deviation and assumed to be 75 KHz for commercial FM. $f_d$ represents the maximum shift of f(t) relative to the carrier frequency.

For a composite stereo FM signal and as is discussed in U.S. patent 5,239,585 issued August 24, 1993 to Randall C. Restle, the message signal (m) will typically be a baseband modified signal (BBMUX) having the form:

$$2) \qquad {}_{fm}(t)= BBMUX = [Left (t) + Right (t)] + Ap \, Sin \, (?_p t)$$

$$+$$

$$[Left(t) - Right(t)] \, Sin \, (2?_p t)$$

where:

$_{fm}(t)$ = the time varying value of the composite signal
Left(t) = the time varying value of the left channel
Right(t) = the time varying value of the right channel
$A_P$ = the amplitude of the pilot signal
$?_P$ = the pilot angular frequency $2pf_P$
$?_P t$ = the pilot frequency phase angle; and
$f_P$ = pilot frequency

Therefore, as discussed above, the BBMUX signal consists of the L+R, the pilot and the AM modulated L-R signals. These signals are multiplexed and filtered. The L-R signal is modulated with a carrier frequency such as for example 38 KHz and then added to the L-R channel with a pilot frequency such as a 19 KHz pilot signal and put out on the airways in the form of the signal discussed in the Equation 1) above.

The transmitted composite FM stereo signal is then received by a radio or other receiver, demodulated and then decoded to obtain the Left and Right information channels. As is known, however, demodulation of FM signals by digital circuitry such as Digital Signal Processors (DSP) is more readily accomplished if the conventional signal is converted to a complex baseband FM signal having a real portion (RL) and an imaginary or quadrature portion (IM).

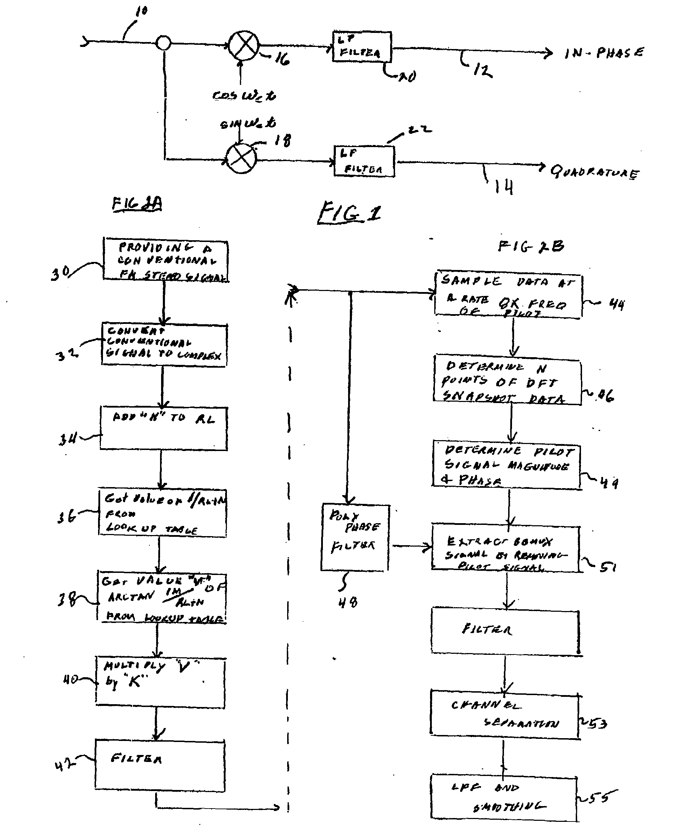

Figure 1 illustrates typical circuitry for this conversion.

As is known, an FM signal at baseband, or zero frequency, is the result of "mixing out" the carrier frequency from the FM signal, as shown in Figure 1. Thus, the carrier frequency no longer appears in the FM equation. The generation of complex data is the result of mixing FM signal with a cosine and sine local oscillator (LO), and the process can be derived mathematically by using the complex version of the FM equation. The mixing process is a simple multiplication of signals where the cosine mixing term and sine mixing term are multiplied with the incoming FM signal. For baseband results, both mixers oscillate at the FM carrier frequency $?_c$. As shown, the total mixing operation produces a real (in-phase) and imaginary (quadrature-phase baseband component.

It will also be appreciated that Equation 1 above

$$1) \qquad x_{FM}(t) = A_c \cos (2pf_c + \emptyset(t)_{FM}, \text{ and since } ?_c = 2pf_c$$

$$1A) \qquad x_{FM}(t) = A_c \cos (?_c + \emptyset(t)$$

However, as will be appreciated by those skilled in the art, Equation 1A can also be written as:

$$x_{FM}{}^{(t)} = Re \{ A_c \, e^{j[?_c{}^{t} + \emptyset(t)]} \}$$

Thus, it is seen that the input $X_{FM}t$ on line 10 of Figure 1 can be expressed by an equation in the form of Equation 1A. Consequently, the in-phase component will be $X_{FM}(t) \cos (?_c t)$ and is represented by:

$$4) \qquad \text{in-phase} = Re[A_c e^{j[?_c{}^{(t) + \emptyset(t)]}} \cos ?_c \, t$$

which as will be appreciated by those skilled in the art can be reduced to:

$$5) \qquad \text{in-phase} = A_c/2 \, RL[e^{j\emptyset(t)}]$$

Likewise, the quadrature-phase component will be

$$6) \qquad \text{Q-phase} = Re[A_c e^{j[?_c{}^{t+\emptyset(t)]}}] \sin (?_c(t))$$

which is reduced to

$$7) \qquad \text{Q-phase} = j \, A_c/2 \, Im[e^{j\emptyset(t)}]$$

Of course, $X(t)_{FM}$ baseband signal is equal to Equation 5) + Equation 7) which can be reduced to

$$8) \qquad X(t)_{FM} = (A_c/2)(e^{j\emptyset(t)})$$

Referring now to Figure 2, there is shown the complex Cartesian coordinate system and the complex unit circle $|z|=1$. From Equation 8, the complex equation for an FM signal at baseband, a complex-valued FM sample can be represented by a vector on the complex unit circle having an amplitude and a phase angle. A complex sample gives two pieces of information, a real and imaginary component. The polar form of a complex number z, where $x=x+jy$, can be represented by the following equations:

$$9) \qquad z = r \cdot e^{j\theta}$$

$$10) \qquad r = \sqrt{x^2 + y^2}$$

$$11) \qquad \theta = \tan^{-1}(X/Y)$$

where X is equivalent to the IM or quadrature portion and Y is equivalent to the RL or in-phase portion.

The polar form of a complex number, shown in Equation 9, can be used to extract the phase angle of a complex sample. Each incoming complex sample will have a new amplitude and phase angle. Since FM signals store all of their information in the phase, it is seen that the phase angle is the information required to demodulate a complex-sampled FM signal.

Successive complex-valued samples can be shown to "rotate" around the complex unit circle in Figure 3. For example, if a sinusoid with a constant frequency is complex sampled, each consecutive sample can be represented as a vector rotating around the complex unit circle. The degrees of advancement between consecutive samples can be expressed by the following equation.

$$12) \qquad \Delta\Theta = \frac{\text{frequency of signal}}{\text{sample rate}} \cdot 360°$$

Equation 12 is used to directly relate the phase difference between two complex-valued samples. In the previous example, suppose the sinusoid is sampled at a rate eight times greater than its frequency. Applying Equation 12), each vector will travel $(1/8 \ (360°)) = 45°$ from the previous sample's location. Furthermore, at the Nyquist sample rate, or $2f_{max}$, each successive vector will travel $180°$ from the last vector's position.

Thus, it is seen that this FM demodulation technique requires division and arctan calculations. That is, $\theta = \text{arctan}^{X}/_{y}$, where X = IM and Y = RL so that $\theta = \text{arctan}^{IM}/_{RL}$. However, as is well understood by those skilled in the art, typical fixed point DSPs (FP DSP) do not include dedicated hardware for such calculations. Consequently, other various methods must be used to accomplish these calculations in the commercial or typical DSP, such as for example TI's fixed point DSP TM5320C6201. The Newton-Raphson method is one of the most commonly used methods for division calculations for FM demodulations that require the division of IM/RL (IM = imaginary/ RL = real). This technique gives the maximum accuracy of the calculation requiring the use of a reciprocal instruction. Another way of performing division in a fixed point DSP is by using "conditional subtraction" method. A third method and the fastest of all is the use of look-up tables for 1/RL and then multiplying by IM (the imaginary term). Unfortunately, there is a disadvantage of using look-up table methods because of the very small values of RL encountered. If the term RL = cosine T is used, the size of the look-up table must be very large for acceptable accuracy. The obvious disadvantage of such a large look-up table is the inefficient use of memory. The method of the present invention, however, uses the fast look-up table method with an approximation. This approximation overcomes the memory problems faced by the conventional look-up table approach.

SUMMARY OF THE INVENTION

As will be appreciated by those skilled in the art and discussed above, one of the calculations encountered in the demodulation and decoding of digital complex base-band FM signals (BBMUX) is dividing the imaginary term IM by the real term RL. That is, IM/RL. The inefficient memory usage which is a result of the extensive look-up table required by the very small values is overcome by the teachings of the present invention by utilizing the fact that the real term RL is an in-phase representation, and the fact that the real term RL as used in a complex FM base-band system is determined from the function [cosine T]. As is well known, the solution of the cosine function will always, of course, range between -1 and +1 for all values of T. Therefore, by adding the number two (2) to the RL cosine T value, the range of the denominator will be shifted from between -1 and +1 for 1/RL to between 1 and 3 for 1/RL+2. That is, 2 - 1 = 1, and 2 + 1 = 3. Thus, the addition of two (2) to cosine T solves the problem of having a very large look-up table required by the small values of RL as they pass through 0. As will become clear hereinafter, addition of two (2) to the RL value results in a reduction of amplitude of the demodulated signal by a constant factor K that is substantially uniform over the full range. Therefore, if the output of the demodulation process is multiplied by this same constant factor K, a demodulation signal can be obtained which has an excellent signal to noise ratio. That is, the resulting BBMUX signal is almost identical to that calculated by the Newton-Raphson method and perhaps superior to the "conditional subtraction."

Furthermore, using this approach results in a gain in speed over that of the other available methods, and at the same time, provides for very efficient memory usage when compared to the very large and extensive look-up table if just the reciprocal of the values of cosine T are used.

BRIEF DESCRIPTIONS OF THE DRAWINGS

For a more complete understanding of the present invention, and the advantages thereof, reference is now made to the following detailed description of certain particular and illustrative embodiments and the features and aspects thereof, by way of example only, and with reference to the figures of the accompanying drawings in which:

Figure 1 illustrates the processing step of converting conventional FM signal into a complex FM base-band multiplexed signal having an In-Phase portion and an Imaginary portion.
Figures 2A and 2B illustrate generalized process flow diagrams for demodulating (Figure 2A) and decoding (Figure 2B) an FM BBMUX signal according to the teachings of this invention.
Figure 3 illustrates the use of polar coordinates to represent the quadrature and real portion of the FM signal.
Figures 4A, 4B and 4C represent the conventional base-band FM signal, and the Imaginary (Quadrature-Phase) and Real (In-Phase) portions of the complex base-band FM signal, respectively.
Figure 5 illustrates the magnitude of the BBMUX signal as determined if Newton-Raphson was used to calculate the value of 1/RL and using the look-up table of the present invention to calculate 1/RL + 2.
Figure 6 compares the magnitude of the BBMUX signal as determined by Newton-Raphson in Figure 5 and the look-up table of the present invention after multiplying by the factor K.
Figure 7 is a block diagram of non-coherent decoding circuitry.

DETAILED DESCRIPTION OF PREFERRED EMBODIMENTS

As was discussed above, an FM base-band multiplex (BBMUX) signal which must be decoded, will typically be of the form:

$$BBMUX = [Left(t) + Right (t)] + A_P \, Sin \, (W_P t) +$$

$$[Left \, (t) - Right \, (t)] \, Sin \, (2W_P t)$$

where:

$A_p$ = amplitude of a pilot signal
$W_p$ = angular frequency of the pilot signal as determined by 2 x p x $F_p$
$F_p$ = the pilot frequency

Assuming $F_p$ = 19 $KH_z$, then WP = 2 x p x 19 $KH_z$ = 119.38 $KH_z$
If the base-band multiplex (BBMUX) signal is transmitted as an FM signal, it will be used to modulate an FM carrier signal using a sampling frequency of $F_S$ = 44.1 x 32 KHz or $F_S$ = 1,411 KHz. Therefore, assuming the carrier frequency $F_C$ = $F_S$/4 or 1,411/4, then $F_C$ = 352.8 KHz.
Referring again to Figure 1 and also Figure 2A, it will be appreciated that a conventional or step base-band FM signal (BBMUX) = $A_c e^{j\emptyset(t)}$ provided on line 10 in Figure 1, and indicated at box 30 in Figure 2A may be converted to a complex base-band FM signal as indicated at step 32 in Figure 2A. This step is illustrated in Figure 1 as producing a real (RL) in-phase base-band component on line 12 and an imaginary (IM) quadrature-phase base-band component on line 14 as was discussed above by mixing or multiplying the received FM signal by the sine and cosine terms as indicated at mixers 16 and 18. the circuit will also typically include LPF (filters) 20 and 22. Figure 4A represents the conventional BBMUX signal before being converted to a complex signal, and Figures 4B and 4C illustrate the imaginary or quadrature and real components of the signal respectively as an output on lines 12 and 14. It is this quadrature and imaginary signals that is applied to the DSP for demodulation and decoding.
As discussed above, in typical transmission systems a conventional FM signal includes left and right stereo signals mixed with an FM carrier and transmitted over the air waves or through a wire medium and then converted to the quadrature and real components by methods well known in the art. In any event, the real and quadrature portions of the signal will be provided to the DSP circuitry for demodulation and decoding.
Therefore, according to the present invention, the demodulation process continues in the DSP as discussed above with respect to Equations 5 through 11, which as can be seen from Equation 11 requires the calculation of X/Y or actually IM/RL. Since a fixed point DSP typically does not include dedicated circuitry for performing such division, it is well know in the art to use other techniques. Such other techniques include the "conditional subtraction" technique or the use of the Newton-Raphson method if very accurate results are desired. There is also a third method, which is the fastest, but requires a look-up table for the value of 1/RL. That is, the reciprocal value of RL. Once the value of 1/RL is determined, that value is then multiplied by the value of IM of the signal. However, as will be appreciated by those skilled in the art, the value of RL will be determined by the value of the cosine T as T varies from 0 to 2 p. Thus, as is recognized by those skilled in the art, the value of cosine T when evaluated between the entire range of 0 to 2 p will vary from -1 to +1 and consequently, includes extremely small values as it passes through the zero value between -1 and +1. Consequently, it is seen that the prior art method of using a look-up table for the reciprocal of 1/RL to perform the division calculation of IM over RL, although faster than the other two methods, has a major disadvantage of requiring an extremely large look-up table or set of values because of the very small numbers generated in the denominator as the values pass through zero.

Therefore, according to the teachings of this invention, the fact that the RL value is an in-phase representation allows the RL part or value to be manipulated in such a way so as to solve this difficult problem of having a look-up table for very small values. More specifically, and as shown in step 34 of Figure 2, by adding a numeral value N to the value of RL (which it will be appreciated, RL ranges from -1 to +1) before calculating the reciprocal value (i.e. 1/RL + N) will provide a significant change from the original value of 1/RL. For example, as mentioned above, since RL varied between -1 to +1, the reciprocal value of 1/RL also ranges from -1 to +1, and therefore, the look-up table must include values that approach and pass through zero. However, if the number two (2) is added to RL prior to taking the reciprocal value, the final value of 1/RL+2 will range from 1 to 1/3 and does not go through zero. Therefore, it is seen that there are no values less than 1/3 and no values greater than 1. Therefore, the size of the look-up table indicated at step 36 of Figure 2A may be significantly reduced since the values do not pass through zero and there are no extremely small values. It will also be appreciated that the value of N in the equation 1/RL + N is preferably chosen to be the integer 2 as this provides the simplest and most effective results. However, it should be understood that other values of N may be used advantageously, but if the value of N varies much from the value of 2, the range between the highest value to the lowest value begins to increase significantly thereby again increasing the size of the look-up table. For example, if the value of one (1) was added rather than two (2), the denominator would again go to 0 and consequently the value would increase to infinity, which would make the computations just as difficult as if the number one (1) had not been added. Likewise, if values much greater than 2 are added to RL in the 1/RL function, the separation between the maximum and minimum values decreases. This means that smaller and smaller numbers must be used to distinguish between different values. Consequently, it is believed the practical range of numbers to be added to RL for use with this technique ranges from about a value of RL+1.1 to achieve a total or overall range of between 10 and 0.9 and adding a value of 5 to the value of RL to achieve a total or overall range of between 0.3 and 0.2.

Thus, by adding a value N to the function 1/ RL to obtain 1/RL+N, the range is substantially shifted and if N is chosen to be a value between about 1.1 and 5, the problem of having a look-up table with very small values will be solved. After the reciprocal of the term 1/RL + N is determined, the arctangent of the resulting value is then determined as indicated at step 38 of Figure 2A. That arctangent value is preferably also determined by referring to a look-up table.

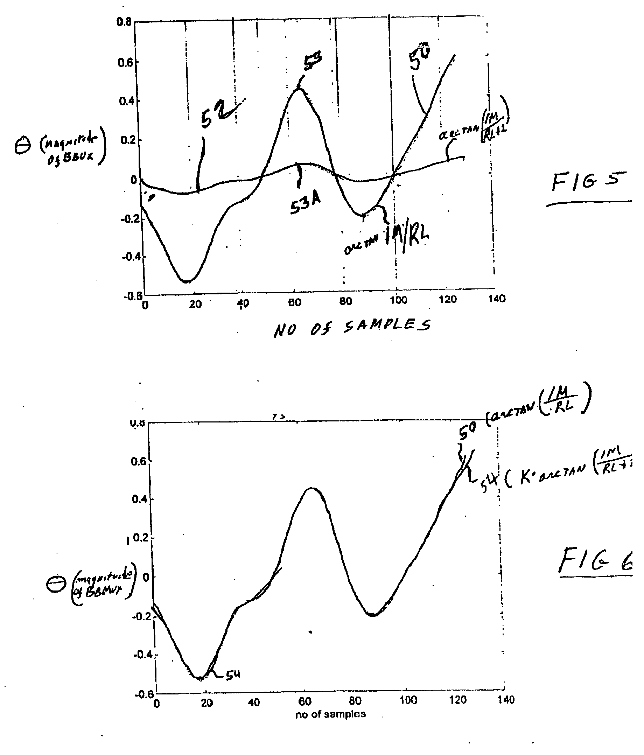

Further, referring to Figures 5 and 6, assuming the value of N is chosen to be 2, there is an overall reduction of amplitude of the demodulated signal by a factor K that is substantially uniform. In the example illustrated in Figures 5 and 6, the factor K was simply determined by taking the ration of the amplitude of curve 50 and curve 52 at peak 53. That is, $K = \frac{Max(idealBBMUX)}{Max(scaledBBMUX)}$. This ratio was calculated to be approximately 7.

Referring again to Figure 5 and as described above, curve 50 represents the magnitude of BBMUX determined by solving for the arctan of IM/RL when computed in the typical and prior art techniques of using Newton-Raphson, conditional subtraction, or a very large look-up table for 1/RL. The curve 52, which has an amplitude that varies to a much smaller degree around the zero base line, but has the same shape as curve 50. The curve 52 is the magnitude of BBMUX determined by solving for the arctan of IM/RL+2. Now, referring to Figure 6, we have the same curve 50 determined by solving the arctangent of X/Y (IM/RL) as displayed in Figure 5. However, the BBMUX curve determined from the arctan of IM/RL + 2 has been multiplied by the factor K as indicated by step 40 of Figure 2A and the shape of the curve 54 using (K) (arctan (1/RL+2)) is seen to be almost identical to the curve 50. Therefore, as seen in the flowchart, we now have determined and demodulated the magnitude of the conventional FM stereo signal. Thus, by taking the arctangent of IM/RL+2 and then multiplying with the amplification factor K at the output, an excellent approximation to the demodulated signal is obtained. Further, since the look-up table does not go through zero and consequently does not have very small values, memory is saved and the number of cycles required to complete the calculation is reduced considerably which, of course, increases the speed of the computations. After the signal has been demodulated and the BBMUX signal obtained, it is typically filtered as indicated at step 42 of Figure 2A prior to decoding the signal to determine the left and right input signals.

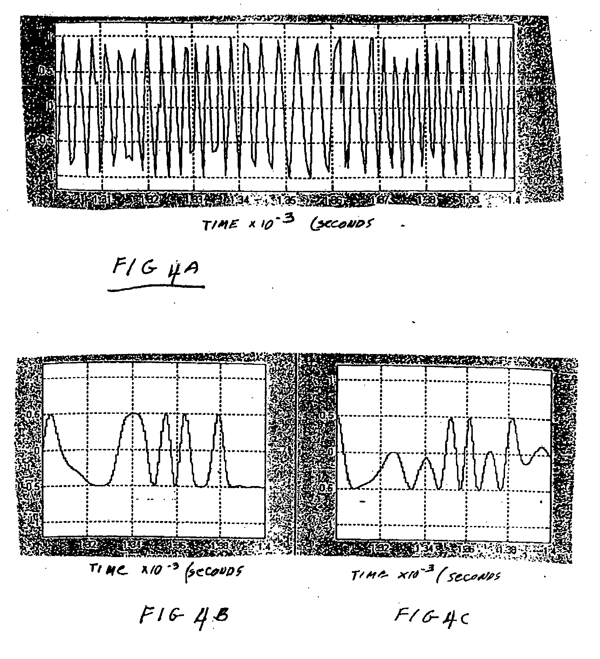

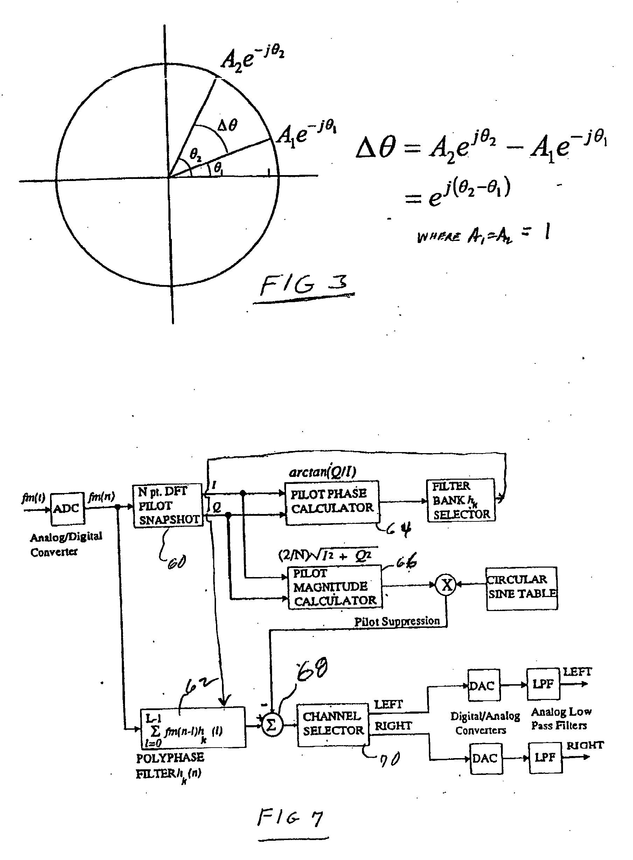

Therefore, referring to Figure 2B and according to the present invention, the DSP will be programmed for decoding using the non-coherent scheme similar to the scheme disclosed in U.S. patent 5,239,585 issued to Randall C. Restle. The non-coherent scheme, is described below. Figure 7 shows a block diagram of the non-coherent scheme described by Utter. The non-coherent scheme is based on performing Discrete Fourier Transform (DFT) snapshots of the composite signal samples that are provided by an analog to digital converter (ADC) at a sample rate equal to 8 times the pilot frequency. It will be recalled that in the example discussed earlier, the pilot frequency was 19 KHz. The DFT is calculated only at the pilot frequency of 19 KHz. The pilot's signal phase angle is then acquired from the resulting DFT snapshots. The phase angle is used to select an appropriate polyphase interpolation filter bank in a manner known by those skilled in the art. The interpolation filtering is then performed to extract the left and right audio signals from the composite signal. The left and right audio signals are then output to a digital to analog converter (DAC). This non-coherent method allows for the design of a digital decoder without the need of synchronizing to the phase of the pilot signal and thus the need for phase locked loop (PLL) hardware is eliminated. More specifically, the composite signal is sampled at a uniform rate, and the pilot signal phase and magnitude is acquired by calculating a Discrete Fourier Transform (DFT) at the pilot signal's frequency. The signal is then up-sampled by a factor U and a polyphase interpolator filter is applied to the signal in order to interpolate what the value of the incoming signal was at those instances when the pilot signal was at 45°, 135°, 225° or 315°. As will be recognized by those skilled in the art, an N point DFT is employed to determine the phase angle and magnitude of the pilot signal, therefore, the only DFT complex value of interest is the one at $F_P$=19 KHz. The formulas for an N Point DFT at frequency $F_P$ is:

$$12) \quad I = \sum_{n=0}^{N-1} fm(n) \cdot \cos(2\pi n F_p / F_s) = \sum_{n=0}^{N-1} fm(n) \cdot \cos(\pi n / 4)$$

$$13) \quad Q = \sum_{n=0}^{N-1} fm(n) \cdot \sin(2\pi n F_p / F_s) = \sum_{n=0}^{N-1} fm(n) \cdot \sin(\pi n / 4)$$

$$14) \quad A_p = (\frac{2}{N}) \cdot \sqrt{I^2 + Q^2}$$

$$15) \quad \text{Pilot angle} = \arctan(^Q/_I)$$

I and Q are the in-phase (real) and the quadrature (imaginary) components of the pilot respectively.

It is desirable to perform a DFT snapshot at a rate such that the pilot signal will not drift by more than 6.43° between snapshots. Typically, the pilot signal's frequency may deviate by as much as 2 Hz, which corresponds to a phase drift rate of 720°/sec. At this rate, it would take 8.93 msecs to drift 6.43°. At a sample rate of 152 KHz, this would be equivalent to approximately 1357 signal samples. Therefore, the DFT snapshot rate is chosen to be greater than 1 snapshot/1357 samples.

Factors used in calculating the DFT are determined by calculating the cos($\pi n$/4) and sin($\pi n$/4) terms, letter n be integers in the range [0,...7,]. Therefore, only 8 cosine and 8 sine terms are necessary to compute the DFT. Using the non-coherent scheme will require a DFT (differential fourier transform) snapshot as indicated at block 60 in Figure 7 for 128 points at the pilot signal frequency (as shown at step 46 in Figure 2B) in order to determine the pilot signal magnitude and phase. Since the pilot frequency was chosen to be 19 KHz in this embodiment, the sampling rate is preferably chosen to be 152 KHz as that number is eight times the pilot frequency. Further, this rate is also above the Nyquist rate of 106 KHz. Therefore, for a time period of 2 $\pi$ of the signal, the pilot frequency computations need to be performed at 45°, 90°, 135°, 180°, 225°, 270°, 315° and 360.° The prior art method of accomplishing this is to provide a cosine and sine table, each with eight entries of the value of cosine and sine at these eight phase values (8+8 = 16) and then multiplying the resulting value with the input for every eight points for a total of 128 points (8 x 16 = 128). Consequently, as will be appreciated by those skilled in the art, this prior art method requires eight multiplication and eight addition steps.

A similar but more efficient technique according to the present invention is significantly more efficient in terms of speed of computation. For example, for every eight-sample points, the method of this invention will require no multiplication inside the loop and only six addition computation steps. This technique is based on the fact that the cosine and sine values at 0° (360°), 90°, 180°, 270° and 360° (0°) are either 0 or 1. Therefore, it will be recognized that at these 4 angles or sampling points, multiplication may be completely avoided at four of the eight sampling points since the final value will either be the value of the received signal "s" {i.e. s x (1) = s}, or "0" {i.e. s x (0) = 0} and addition is the only type of computation required. For the remaining four values at 45°, 135, 225° and 315° which do need to be multiplied with the cosine and sine values, the values are first separately added inside the computation loop and then simply multiplied with the same value of 0.707 outside the loop. Of course, necessary scaling must be performed to avoid overflow during the addition process.

The demodulated signal is also passed to a poly phase interpolator filter 62 (Figure 7) as selected by the filter bank selection circuit 63 to interpolate the value of the incoming signal when the pilot signal is at the 45°, 135°, 225° and 315° points as indicated by the poly phase filter block 48 in Figure 2B.

After determination of 128 snapshot points for the DFT (differential fourier transform) points, the magnitude and phase of the pilot signal is determined as shown at 64 and 66 of Figure 7 and step 49 in Figure 2B. Magnitude and phase of the pilot signal is determined according to techniques well known by those skilled in the art, and as mentioned above the pilot signal phase is provided to the filter bank selector 63 that selects the appropriate polyphase filter from filter bank 62. Of course, once the pilot signal magnitude and phase is known, the demodulated information or message signal can be determined by removing the pilot signal from the poly phase filtered signal received from poly phase filter 62 as shown at 68 in Figure 7 and block 51 in Figure 2B. Then, after filtering, channel separation is accomplished by techniques already known by one skilled in the art as indicated at step 53 and block 70 of Figure 2B and 7 respectively.

After channel separation, additional low-pass filtering and smoothing is applied to the two channels to obtain signals which are excellent approximations of the original left and right signals as shown at 55 in Figure 2B.

The effectiveness and efficiency of the invention as described above, was tested against conventional demodulation and decoding methods.

For example, the number of computational cycles was determined with respect to (1) the method of this invention; (2) "conditional subtraction;" and (3) the Newton-Raphson method. Referring now to Table 1, there is shown the number of computational cycles for each of these methods.

Table 1

| Method of Division Used | Required Cycles/Sample |
|---|---|
| Invention (Look-Up Table Approx) | 39 |
| Conditional Subtraction | 87 |
| Newton-Raphson* | 46 |

*Could not be implemented for full format accuracy with the selected DSP. Calculation was for only (3) points.

As can be seen from the table, the look-up table approach of this invention is approximately 40% more efficient than the "conditional subtraction" method in terms of speed.

Since a typical and commercial fixed point DSP does not include hardware dedicated to determine a reciprocal value, it was not possible to obtain a comparison of the number of cycles required by the invention versus the Newton-Raphson method.

Tests were also ran to determine the effectiveness and efficiency of obtaining the 128 DFT snapshot points of the invention which required no multiplication and only six additions computations with respect to the usual eight multiplication and eight addition computations. As shown in Table 2, the number of cycles for the previous method and the number of cycles for the method of this invention are dramatically different.

Table 2

| DFT Method Used | Cycles/Samples |
|---|---|
| DFT Snapshot (Prior Art) | 346 |
| DFT Snapshot (Invention) | 83 |

As seen, the number of cycles ranges from 346 for the prior art technique and 83 cycles for the present technique. Therefore, it is seen that using the techniques of this invention to perform division using a look-up table with an approximation and implementation of a faster DFT snapshot for obtaining samples, a fixed point DSP may readily be used for FM demodulation and decoding for a digital radio application which operates in a fast and efficient method.

Therefore, there has been described to this point a process for demodulating and decoding a conventional stereo FM signal using a look-up table for taking the reciprocal of RL (i.e. 1/RL+2 rather than 1/RL). When the resulting reciprocal value is determined, a very accurate approximation to a transmitted signal is recovered by multiplying with a factor K. A method for reducing the number of computation steps in a non-coherent technique for decoding the left and right channels has also been described. However, although the invention has been described with respect to specific methods, it is not intended that such specific references be considered limitations upon the scope of the invention except as set forth in the following claims.

**Claims**

1. In computational circuitry for determining a baseband multiplex signal (BBMUX) by demodulating a complex FM base-band signal requiring calculation of the arctan IM/RL where IM represents the imaginary or quadrature portion of the complex signal and varies as a function of ?, and RL represents the real or in-phase portion of the complex signal, and varies also as a function of ?, and wherein RL will be a value between -1 and +1 as determined by the function cosine ?, the method of demodulation comprising the steps of:

   adding a numerical value N to RL in the term 1/RL to obtain 1/RL+N;
   providing a look-up table having a range determined by the function 1/cosine ? + N to obtain a range of values between 1/N+1 and 1/N-1;
   multiplying IM times the corresponding value of 1/RL + N from said look-up table;
   determining a scaled BBMUX signal (equivalent to T ) from the arctan of (IM/RL+N) ;
   determining the value of a scaling factor K; and
   multiplying K times the scaled value of the BBMUX signal to recover the approximate BBMUX signal.

2. The method of Claim 1 where N ranges between about 1.1 and about 5.

3. The method of Claim 2 wherein N is equal to the numerical value 2.

4. The method of Claim 1, Claim 2 or Claim 3 wherein said computational circuitry is a fixed point DSP.

5. The method of any preceding claim wherein said BBMUX signal is a composite signal comprising a pilot signal having a known frequency and left and right message signals, and said method further decodes said BBMUX signal comprising the steps of:

   sampling said approximate BBMUX signal at a rate "S" times the pilot signal frequency;
   determining N points of DFT (differential fourier transform) pilot snapshot data at each of the sin and cos of the angles 45, 90, 135, 180, 225, 270, 315 and 360 for a total number "TN" of data points comprising the steps of,
   setting each point corresponding to the sin of 0, 180, and the cos of 90 and 270 = 0,
   setting each point corresponding to the sin of 90 and 270, and the cos of 0 and 180 to the magnitude of the pilot signal,
   determining the value of each point corresponding to the sin and or cos of 45, 135, 225 and 315 by multiplying times 0.707;
   passing said BBMUX signal through a polyphase filter;
   recovering a message signal representing the composite left and right message signals by comparing said polyphase filtered BBMUX signal and said DFT pilot snapshot data;
   separating said composite left and right message signals from said composite message signal.

6. The method of any preceding claim wherein said sampling rate S is eight times the pilot signal frequency and the total number TN of data points is 128.

7. The method of any preceding claim wherein said scaling factor is determined by determining the ratio of the maximum value of arctan IM/RI with the maximum value of arctan (IM/RI + N).

8. A DSP circuit for determining a baseband multiplex signal (BBMUX) by a method as claimed in any preceding claim.

FIG 1

FIG 2A

FIG 2B

FIG 5

FIG 6

TIME x10$^{-3}$ (SECONDS

FIG 4A

TIME x10$^{-3}$ (SECONDS

FIG 4B

TIME x10$^{-3}$ (SECONDS

FIG 4C

$$A_2 e^{-j\theta_2}$$

$$A_1 e^{-j\theta_1}$$

$$\Delta\theta = A_2 e^{j\theta_2} - A_1 e^{-j\theta_1}$$
$$= e^{j(\theta_2-\theta_1)}$$

WHERE $A_1 = A_2 = 1$

FIG 3

---

$fm(t)$ → **ADC** → $fm(n)$ → **N pt. DFT PILOT SNAPSHOT** — $I$, $Q$

Analog/Digital Converter

60

$arctan(Q/I)$

**PILOT PHASE CALCULATOR** — 64 → **FILTER BANK $h_k$ SELECTOR**

$(2/N)\sqrt{I^2 + Q^2}$

**PILOT MAGNITUDE CALCULATOR** — 66 → ⊗ ← **CIRCULAR SINE TABLE**

Pilot Suppression

$$\sum_{l=0}^{L-1} fm(n-l)h_k(l)$$
POLYPHASE FILTER $h_k(n)$

62

68

Σ → **CHANNEL SELECTOR** — LEFT / RIGHT — 70

LEFT → **DAC** → **LPF** → LEFT
RIGHT → **DAC** → **LPF** → RIGHT

Digital/Analog Converters    Analog Low Pass Filters

FIG 7